# EUROPEAN PATENT APPLICATION

(11) **EP 4 083 838 A1**
(43) Date of publication of application: **02.11.2022**
(21) Application number: 21171572.7
(22) Date of filing: 30.04.2021
(51) Int. Cl.: G06F 21/62, G06N 20/00, G06N 3/08, H04L 29/06

(54) **METHOD AND SYSTEM TO COLLABORATIVELY TRAIN DATA ANALYTICS MODEL PARAMETERS**

(71) Applicant: Hochschule Karlsruhe, 76133 Karlsruhe (DE)
(72) Inventor: NOCHTA, Zoltán, 76199 Karlsruhe (DE)
(74) Representative: Müller-Boré & Partner Patentanwälte PartG mbB

(57) **Abstract**

A computer-implemented method, a computer program and a computer system for collaboratively training a model by a plurality of nodes in a computer network are provided. The method comprises receiving, by each of the nodes, the model and storing, by each of the nodes, corresponding local data for training the model. The method further comprises computing, by each of the nodes and according to an algorithm, parameter values of the model using the respective local data of the node and obfuscating, by a first node of the nodes, the computed parameter values of the first node. The method further comprises progressively training the obfuscated parameter values at each further node of the nodes, by adding the computed parameter values of the respective node to parameter values received from the previous node, whereby a final node of the nodes produces modified parameter values. The method further comprises receiving the modified parameter values at the first node and producing trained parameter values for the model by removing, by the first node, obfuscation of the modified parameter values. The method further comprises distributing, to all other nodes of the plurality of nodes, the trained parameter values.

## Description

The technical field is computer networking, more specifically, collaborative training of a model by a plurality of nodes in a computer network. The computer network may be a peer-to-peer network and/or the training may be conducted via machine learning.

It may be desirable to coordinate training of model parameter values based on data collected by nodes (e.g., mobile phones, electric cars) of a computer network. The number of nodes can be up to the order of thousands or millions. In typical federated learning systems, edge devices or servers may train the model using local data samples without exchanging the local data samples.

A central server may coordinate the participating nodes during the learning process, particularly by collecting training data and aggregating model updates. Specifically, in some conventional approaches, local training data is sent to the central server. Such a black box approach (from the viewpoint of the data owner) may be undesirable since the privacy of the data owner is not protected. In particular, there may be a risk that the central server that receives the data could misuse the data. For example, a manufacturer of autonomous cars may be able to determine where a car and driver were at a given time by analyzing training data received from the car for object detection model training. Such training data may include video sequences of traffic. Examples of federated learning methods including central server are provided by Google, Apple, and Tesla.

Federated learning approaches may partially solve the data security and privacy issues associated with centralizing training data at one location. In particular, it may be desirable to avoid sharing training data with a central host or even among other hosts that are performing training. The nodes may coordinate among themselves in order to arrive at a trained model. Decentralized federated learning may prevent a central server from becoming a single point of failure, since model updates are exchanged between interconnected nodes without a need for orchestration outside the nodes.

Accordingly, in federated learning approaches, it is typical that only the model or only model parameter values are transferred between hosts or to the central server. However, the model parameter values may still include sensitive or private data. Hence, in a centralized approach or conventional decentralized approaches, data privacy is a concern. In particular, the central server or the other participating nodes might not be fully trusted by other members of the network.

For example, model parameter values may be shared between the nodes of the network or with the central server and it may be possible to extract sensitive data from the model parameter values. Specifically, the weights of a neural network or the support for a set of items in an association rule may reveal sensitive information. Accordingly, it may be desirable to protect not only training data, but also model parameter values such as the weights of the neural network or the support value of the association rule.

However, in conventional federated learning (training) approaches (whether centralized or decentralized) model parameter values are averaged, e.g., in a network having a star topology. The star topology may be implemented with a central server in the center of the star, such that each node sends data to the center. Alternatively, in the context of decentralized federated learning, the star topology may be implemented such that every node is connected to and distributes values to every other node (i.e., every node communicates with *n*-1 other nodes in the network, where the network has n nodes).

To summarize, it may be desirable to provide an approach to decentralized collaborative learning that does not require trust of the central server and limits the trust between nodes of the network, particularly by limiting access of nodes to the model parameter values of other nodes. Such an approach could be particularly useful in collaborative learning among competitors or among institutions of different countries.

According to an aspect, a computer-implemented method for collaboratively training a model by a plurality of nodes in a computer network is provided. The method comprises receiving, by each of the nodes, the model. The method further comprises storing, by each of the nodes, corresponding local data for training the model.

The method further comprises computing, by each of the nodes and according to an algorithm, parameter values of the model (model parameter values) using the respective local data of the node. The computed parameter values may define a global model state, i.e., a global state of the model.

The method further comprises obfuscating, by a first node of the nodes, the computed (model) parameter values of the first node. The method further comprises progressively training the obfuscated parameter values at each further node of the nodes, by adding the computed parameter values of the respective node to parameter values received from the previous node, whereby a final node of the nodes produces modified parameter values.

The method further comprises receiving modified parameter values at the first node. The method also comprises producing trained parameter values for the model by removing, by the first node, obfuscation of the modified parameter values. The method further comprises distributing, to all other nodes of the plurality of nodes, the trained parameter values.

Accordingly, via the obfuscation, the method may limit access of a second node to parameter values of the first node since the obfuscation masks the parameter values of the first node. For subsequent nodes (e.g., the third and fourth nodes), access to the parameter values of previous nodes is limited by the difficulty in determining the extent of the impact of each previous node on the parameter values. Put another way, it may be difficult for the third node to distinguish a contribution to a parameter value by the second node from a contribution to the parameter value by the first node.

The final node may be the last node in the network of node to receive and process (i.e., train) the parameter values.

The model may be a machine learning model and/or a data analytics model. The model may be trained based on sample data or training data in order to make predictions or decisions without being explicitly programmed to do so. Accordingly, the local data stored at each of the nodes may also be understood as training data or sample data. In the context of the data analytics mode, data analytics (i.e., analytics) may be the systematic computational analysis of data. Data analytics may be performed for discovery, interpretation, communication of meaningful patterns in the data.

The received model may be untrained or dumb. For example, in the context of a neural network, the weight values of the model may be random. Alternatively, the model may have been initially trained using synthetic data.

The received model may be obtained from an external source or created locally in a way that ensures that each node has the same model.

The algorithm may be a pattern recognition algorithm and/or a machine leaning algorithm. In the context of the pattern recognition algorithm, pattern recognition may include the automated recognition of patterns or regularities in data. The machine learning algorithm may be part of artificial intelligence and may improve automatically through experience or the computing or processing of training data. The machine learning algorithm may be a collaborative learning algorithm that trains a model across multiple nodes or devices or servers holding local data (i.e., training data).

The model (i.e., the computational or mathematical model) may be distinguished from the algorithm in that the model may include a data structure while the algorithm may include a sequence of instructions. In the context of a neural network, the algorithm may be an algorithm conventionally applied to a neural network.

The local data may be stored and/or owned by the corresponding node and might not be stored or owned by any of the other nodes.

In some cases, each node is a peer and the computer network is a peer-to-peer network. In other words, the computer network may have a peer-to-peer architecture. Peers may be equally privileged, equipotent participants in the peer-to-peer network.

Although the first node is distinguished from the other nodes in the computer network, any of the nodes in the computer network could be selected as the first node. In some cases, the first node is selected at random. In other cases, the first node is selected according to other considerations, such as the amount of data stored by the first node or the bandwidth of the first node.

Hence, a node with more training data may have a larger impact on the resulting final model then a node with just a few training data records. Starting with the node with more training data may reduce the total training time by avoiding a situation in which the model is biased in a suboptimal direction via a less comprehensive data set. Higher bandwidth of the first node may help avoid network failures or delays early in the training of the mode.

Accordingly, a sequence of nodes in the peer-to-peer network may be selected in decreasing order of data volume or decreasing order of available bandwidth. This may have the advantage of faster convergence, i.e., arriving at a trained model or trained parameter values more quickly. In other words, a particular ordering strategy might lead to faster convergence and a more accurate model in the end, by biasing the model in the right direction early.

Progressively training the obfuscated parameter values may comprise developing or optimizing the parameter values in the model such that subsequent training steps build on previous training steps. For example, when the parameter values include weights, the parameter values may be used within the neural network model as weights for the neural network model. Similarly, in the context of association rules, the parameter values may include support values for the rules.

In the context of four nodes, the progressive training of the obfuscated parameter values may include sending the obfuscated parameter values from the first node to the second node. The computed parameter values of the second node are then added to the obfuscated parameter values of the first node and the resulting parameter values are sent to a third node of the nodes. The third node then adds its computed parameter values to the resulting parameter values received from the second node and sends this result to a fourth and final node of the four nodes. The fourth node then produces the modified parameter values by adding its computed parameter values to the result received from the third node. The modified parameter values computed by the fourth node are then received at the first node.

The computer network may include an arbitrary number of nodes.

Conventionally, a model (i.e., parameter values of the model) may "forget" training from one or more of the nodes (i.e., the training might not be reflected in the model or the impact of the training on the model is unduly minimized). For example: hospital A might train the parameter values of the model 10 times (epochs) with a large set of Xray images showing breast cancer tumors. The next hospital, hospital B might train the parameter values of the model one time using its Xray images of skin cancer. These second set of data (the Xray images of skin cancer) from hospital B will have much less of an effect on the overall model because hospital B trained the model for only one epoch with relatively few images. Now, in case hospital C also trains the parameter values of the model for breast cancer, followed by hospital D, and hospital E, the model will "forget" the skin cancer detection from hospital B.

In order to solve or mitigate the forgetting problem, each node may use similar datasets (e.g., datasets having a corresponding statistical distribution having corresponding parameter types, and/or having the same association rules) of similar size (e.g., within about 10%) and perform the same number of training rounds (e.g., 1), before sending the model to the next node.

In addition or alternatively, multiple training iterations may be performed. Accordingly, after progressive training of the computed parameter values is carried out by each further node and initially trained parameter values are produced by removing the obfuscation, each node may progressively train the initially trained parameter values, possibly for multiple additional iterations across all the nodes before (finally) trained parameter values are produced.

Another possibility would be to vary the sequence (order) in which nodes carry out training for each training iteration. In the first run/epoch, for example, the sequence node 1 → node 2 → node 3 → node 1 might be used, and in the second round another sequence like node 2 → node 3 → node 1 → node 2, etc.

This might reduce the risk related to strong bias in which one or more nodes' data are forgotten (as described above in the hospital example).

The model may include an information filtering system for removing redundant or undesirable information from a body of information (e.g., an information stream). The information filtering system may include or be implemented as a recommender engine (i.e., recommendation system) to predict the rating or preference a user would give to an item.

The model may be rule-based. More specifically, the model may be based on association rules. In the context of association rules, there may be multiple items and multiple transactions, where each transaction includes a subset of the items. Items may be defined as binary attributes.

The model may include a time series model and/or a decision tree. The time series model may use a series of data points indexed in time order in order to perform a search for meaningful patterns. In particular, the search for meaningful patterns may be carried out on the time series data.

The decision tree may use a tree-like model of decisions and their possible consequences, including chance event outcomes, resource costs, and utility. The decision tree may be implemented via a flow chart structure in which each internal node represents a test on an attribute, each branch represents the outcome of the task and each node represents a class label (decision taken after computing all underlying attributes). The paths from root to leaf may represent classification rules.

The global model state may refer to the status of adjustable variables or parameters of the model. Hence, whenever a weight of the neural network changes or a support value of an association rule changes, the global model state may change as well. A goal of the progressive training may be to arrive at an optimal global model state.

The training of the obfuscated parameter values by the respective further nodes may lead to a potential update of the model at the respective further node. For example, in the context of rule-based machine learning, an update of the model may occur when the local data of the respective further node corresponds to one of the rules of the model. It is also possible that the local data of the respective further node does not correspond to one of the rules of the model, in which case the update might not occur. For example, at least one of the computed parameter values of the respective node may be 0, in which case, adding the respective computed parameter values to corresponding parameter values received from the previous node would have no effect.

The algorithm may include rule-based machine learning. Specifically, the algorithm may include association rule learning, more specifically, affinity analysis (e.g., market basket analysis). Rule-based machine learning may describe a method that identifies, learns, or involves rules to store, manipulate or apply. Accordingly, a set of relational rules may be identified and used, such that the rules implement the model and represent the information captured by the model. The information captured by the model may be referred to as transactions of the model or a dataset of the model.

Association rule learning may describe relations between variables. Accordingly, rules may satisfy a specified minimum support and/or a specified minimum confidence. A support (or support value) may indicate how often an item (or itemset) appears in the dataset of the model. A confidence (i.e., confidence value) may specify how often a particular rule has been found to be true. Accordingly, when the algorithm includes rule-based machine learning, the parameter values may include one or more of the following: support, confidence, lift, and conviction. The lift may reflect both the support of a rule and the dataset of the model. The conviction may be the frequency that a rule makes an incorrect prediction.

In the context of rule-based machine learning, the trained parameter values may include a plurality of support values and means for matching the support values to corresponding rules. Affinity analysis may refer to meaningful correlations between different entities (e.g., consumer goods, such as books or groceries) according to their co-occurrence in the dataset.

In some cases, the model includes a neural network. The neural network may be referred to as an artificial neural network or a simulated neural network. The neural network may include a plurality of layers, e.g., an input layer, one or more hidden layers, and an output layer. The parameter values (e.g., the computed parameter values) of the neural network may include weights. The parameter values may include biases (i.e., constants added to the input). The model may be a deep neural network, possibly including up to several hundred hidden layers.

Accordingly, the connections of a biological neuron may be modeled as weights within the neural network. Inputs to the neural network may be modified by a weight and summed. This may be referred to as a linear combination. Further, an activation function may control the amplitude of the output of the neural network. The deep neural network may have multiple layers between the input layers (one or more layers that receive data) and output layers (one or more layers that produce results for given inputs). The components of the neural network may include neurons, synapses, weights, biases, and functions.

The neural network may be for detection or recognition of objects in images (e.g., facial recognition). Object recognition may involve classification of objects, possibly together with their two-dimensional positions in the image or three-dimensional poses in a scene. The neural network may also be used for identification of individual instances of an object, such as a person's face or fingerprint.

In some cases, the computed parameter values (i.e., computed model parameter values) are numeric. Obfuscating the computed parameter values may comprise executing one or more operations on the computed parameter values. The operations may include mathematical operations, more particularly, arithmetic and/or bitwise operations.

The operations may comprise one or more of the following: addition, subtraction, multiplication, division, and Boolean algebra. Executing the operations may comprise applying the same one or more operations to each of the first parameter values. For example, executing the operations on the computed parameter values may comprise executing the same addition operation on each of the computed parameter values. In addition or alternatively, the same bitwise operation may be executed on each of the computed parameter values.

The operations may include applying a secret value to each of the computed parameter values. The secret value may be a pseudo-random value, as discussed below.

The secret value may be greater than zero and may be less than a multiple of the total number of local data values (e.g., transaction values). Hence, the number added may be less than twice the total number of values at the node or less than three times the total number of values.

In some cases, obfuscating the computed parameter values comprises generating a pseudo-random value and applying the pseudo-random value when executing the operations on the computed parameter values. For example, when the operation is addition, the same pseudo-random value may be added to each of the computed parameter values. The pseudo-random value might only be known to the first node and not to the other nodes.

Alternatively, pseudo-random values may be generated for and applied to each of the computed parameter values. However, applying the same pseudo-random value to each of the computed parameter values may be more computationally efficient and may also provide adequate security, particularly when there are a large number of parameter values (e.g., thousands or millions), as in the case of a neural network. In such cases, the computational expense of generating and tracking the large number of pseudo-random numbers may outweigh security benefits applying using different random numbers to different parameter values.

For example, the mathematical operations may include an addition operation. Accordingly, the pseudo-random value may be added to each of the parameter values. Alternatively, the mathematical operations may be or include multiplication. Accordingly, the parameter values or each of the parameter values may be multiplied by the pseudo-random value. For example, in the context of association rule learning, one or more addition operations may be part of the obfuscating. Alternatively, in the context of the neural network model, one or more multiplication operations may be part of the obfuscating.

Specifically, in the context of the neural network model, the obfuscation may be implemented by multiplying each of the weights of the neural network model by the same pseudo-random value.

In the context of rule-based machine learning or neural networks the computed parameter values may include integers or ratios of integers.

Obfuscating the computed parameter values may include applying a cryptographic function, such as an encryption function (asymmetric or symmetric) or a hash function (e.g., SHA-512).

The obfuscation may be performed via an obfuscation function. The obfuscation function may have an inverse function. Removing the obfuscation of the modified parameter values may comprise applying an inverse of the obfuscation function (i.e., the inverse function) and/or applying the secret value.

Producing the trained parameter values may comprise subtracting the obfuscated parameter values from the respective modified parameter values to produce resulting parameter values (thereby removing the obfuscation) and adding the computed parameter values of the first node to respective ones of the resulting parameter values (leading to parameter values that reflect the locally computed parameter values of all of the nodes and from which obfuscation has been removed).

Alternatively, in case only addition was used to obfuscate the computed parameter values, e.g., by adding the secret value (e.g., the pseudo-random value) to the computed parameter values, the obfuscation may be removed by subtracting the secret value from the modified parameter values to produce the trained parameter values.

The obfuscation function may include one or more operations. When the operations of the obfuscation function include addition, the inverse of the obfuscation function may include a subtraction operation. When the operations of the obfuscation function include multiplication, the inverse of the obfuscation function may include a division operation. Accordingly, it may be that the obfuscation function includes the same number of operations as the inverse of the obfuscation function.

The secret value may comprise a constant integer value. The secret value may be or include an operand of at least one of the operations of the obfuscation function. The secret value may be a function of the operand of at least one of the operations of the obfuscation function.

For example, the obfuscation function may include an addition operation. Accordingly, the secret value may be a value that is added to each of the parameter values. Alternatively, the obfuscation function may be or include a multiplication operation. Accordingly, the parameter values or each of the parameter values may be multiplied by the secret value.

For example, in the context of association rule learning, addition operations may be part of the obfuscation function. Alternatively, in the context of the neural network model, multiplication operations may be part of the obfuscation function.

Specifically, in the context of the neural network model, the obfuscation may be implemented by multiplying each of the weights of the neural network model by the same secret value. Accordingly, the secret value may be used in all of the operations of the obfuscation function and the inverse function.

Producing the trained parameter values may further comprise normalizing the modified parameter values after removing the obfuscation of the modified parameter values. The normalizing may be used to arrive at trained parameter values that correspond to an average of computed parameter values rather than a sum of computed parameter values.

The normalizing may include dividing each parameter value by the number of parameter values or the number of nodes. For example, in the case of four nodes that each contribute one parameter value, each of the parameter values may be divided by four. The normalizing might not be applicable in all cases. For example, normalizing might be applicable for the neural network, but not for rule-based machine learning.

The modified parameter values may differ from the computed parameter values in that the modified parameter values have been trained by all nodes of the plurality of nodes, whereas the computed parameter values might only reflect the local data of one of the nodes.

The trained parameter values may differ from the modified parameter values in that the obfuscation (e.g., applied by the first node) has not yet been removed from the modified parameter values, while the trained parameter values are no longer obfuscated. Hence, trained parameter values may be produced from modified parameter values by removing obfuscation from the modified parameter values. The obfuscation may be removed by respective ones of the nodes that obfuscated the parameter values.

When the model includes the neural network, obfuscating the computed parameter values may comprise applying the same one or more arithmetic operations to each weight of the neural network. In this case, the one or more arithmetic operations may consist of a single multiplication operation.

The plurality of nodes may form a logical ring. Each of the further nodes may be a neighbor of a previous node in the logical ring. The first node may be a neighbor of two further nodes. The nodes may form a logical ring during training of the model. During distribution of the model, the trained parameter values may be distributed to all further nodes of the ring from the first node. Alternatively, if obfuscation and obfuscation removal are performed on a node (or nodes) other than the first node, the distribution to all other nodes may be carried out from the final node to perform obfuscation removal.

The logical ring topology, in which nodes send parameter values to neighbors for further training, may be contrasted with the star topology, in which each node communicates with n-1 other nodes for training (where n is the number of nodes in the network). The ring topology may have the advantage that communication overhead required for training is reduced in comparison with the star topology.

The logical ring topology may be contrasted with a ring network since the nodes are all able to communicate with each other and "ring" describes the flow or progression of training rather than the way data is able to travel.

In addition, the averaging of model parameter values, sometimes required in the context of conventional federated learning approaches in order to emphasize models with more training data, can be avoided when using the logical ring, particularly by training according to the amount of training data at each node (starting with the node having the most training data and continuing in descending order).

When distributing the trained parameter values, the plurality of nodes might not function as a logical ring any longer, in particular, the trained parameter values may be distributed from one node (e.g., the first node) to all the other nodes.

The order of training may be determined according to a number of datasets that are stored by each node or a bandwidth of each node. The order of training may be descending, such that the first node has the highest number of datasets and the last of the further nodes to train the parameter values has the lowest number of datasets, or the first node has the highest bandwidth and the last node has the lowest bandwidth.

Thus, the order of training may be determined according to the number of datasets that are stored by each node. The order of training may be descending, such that the first node has the highest number of datasets and the last node of the further nodes to train the parameter values has the lowest number of datasets. In other words, the first node may have the highest data volume and the last of the further nodes to train the parameter values may have the lowest data volume. Such an order of training may be advantageous, since the model may be biased in toward an accurate result early on. In other words, by starting with the node with the highest number of datasets (i.e., the most local data for training) it may be possible to train the model more quickly and more accurately.

Alternatively, an order of training from the node with the highest bandwidth to the node with the lowest bandwidth could increase the likelihood of successful steps at the beginning of the training and might produce an adequately trained model without the need perform training at all the nodes.

In some cases, upon determination that a further node of the plurality of nodes is unreachable (e.g., a specified number of attempts may be made to reach the further node or the further node may be considered unreachable after a specified period), the further node may be (e.g., temporarily) removed from the plurality of nodes and training may continue at a neighbor of the removed node. The specified number of attempts may be about 3 to about 5; the specified period (i.e., timeout) may be about 100 seconds to about 500 seconds.

Accordingly, the progressive training may include attempting to reach the further node and skipping the further node if the further node is determined to be unreachable. For example, the further node may fail or crash.

In some cases, communication between the nodes is encrypted and/or each node is authenticated before communicating with another node of the plurality of nodes. In this way, sensitive data can be protected from users outside the computer network.

Distributing the trained parameter values may comprise communication according to a gossip protocol. Accordingly, periodic, pairwise interactions between nodes may be used to ensure that the trained parameter values reach all nodes of the plurality of nodes. When the nodes form a logical ring, the periodic, pairwise interactions between nodes may occur between neighbors in the ring.

Progressive training of the obfuscated parameter values at each further node may refer to training that builds on previous (or earlier) training. Moreover, the training of the obfuscated parameter values at each further node is carried out on parameter values received from the previous node, i.e., the obfuscated parameter values in the case of the second node or parameter values resulting from adding parameter values computed locally at the respective node to received parameter values from a previous node on the logical ring in the case of a subsequent node. Accordingly, the progressive training may also be referred to as additive training.

The method may further comprise adding, by a further node, model parameters to the model, i.e., expanding the model itself rather than changing values of existing parameters. This may be applicable to a model based on association rules and other similar models, rather than a neural network. The further node may compute parameter values for the added model parameters. In addition, the further node may obfuscate the computed parameter values of the added model parameters. Producing the trained parameter values may further comprise removing, by the further node, the obfuscation carried out by the further node. In some cases, each node in the computer network may add parameters and obfuscate parameter values. In such cases, the obfuscation is removed by each node of the plurality of nodes before the trained parameter values are distributed. Hence, each node that performs parameter value obfuscation performs corresponding obfuscation removal.

A list of nodes in the plurality of nodes and/or an order of training may be maintained by a service provider. Accordingly, the service provider may determine which node of the plurality of nodes should be the first node.

The method may further comprise, before distributing the trained parameter values, evaluating by a service provider, an accuracy of the model (e.g., how often a neural network correctly recognizes a face). When the accuracy of the model has not reached a threshold (e.g., at least about 95% accuracy), the method may further comprise repeating the training of the parameter values until the accuracy reaches the threshold. The model may be tested for accuracy using labeled test data stored at the node. The test data may be separate from local data used for training the model (i.e., the test data might not be used for training the model).

Hence, if training is repeated at a node, all available local data (including new training data and previously used training data) at the node may be used for the repeated training.

In some cases, the model is received from a server of a service provider. Accordingly, the model may include initial parameter values developed by the service provider.

The model may be distributed by the first node. Alternatively, the model may be distributed by another node.

The terms "training of the model" and "training of the parameter values" may be used interchangeably. Furthermore, the parameter values (e.g., the computed parameter values) may refer the values or variables within the model that are modified or adapted during training of the model. The parameter values may refer to model parameter values.

According to another aspect a computer program is provided. The computer program comprises instructions that, when the program is executed by a computer, cause the computer to carry out the method described above. The computer program may be implemented as a computer program product. The computer program may be implemented in (as part of) a computer readable medium. In particular, the computer program may be tangibly embodied in the computer readable medium.

According to yet another aspect, a computer system for collaboratively training a model is provided. The computer system comprises a computer network and a plurality of nodes connected by the computer network. Each of the nodes is configured to store the model and the local data for training the model, and compute, according to an algorithm, parameter values of the model using the respective local data of the node. A first node of the nodes is configured to obfuscate the computed parameter values of the first node.

Each further node of the nodes is configured to progressively train the obfuscated parameter values by adding the computed parameter values of the respective node to parameter values received from the previous node, whereby a final node of the nodes is configured to produce modified parameter values.

The first node is further configured to receive the modified parameter values and remove obfuscation of the modified parameter values in order to produce trained parameter values for the model. At least one node of the nodes (e.g., the first node) is configured to distribute, to all other nodes of the plurality of nodes, the trained parameter values.

The subject matter described in this disclosure can be implemented as a method or on a device, possibly in the form of one or more computer programs (e.g., computer program products). Such computer programs may cause a data processing apparatus to perform one or more operations described in the present disclosure.

The subject matter described in the present disclosure can be implemented in a data signal or on a machine-readable medium, where the medium is embodied in one or more information carriers, such as a CD-ROM, a DVD-ROM, a semiconductor memory, or a hard disk. In particular, disclosed subject matter may be tangibly embodied in a machine (computer) readable medium.

In addition, the subject matter described in the present disclosure can be implemented as a system including a processor, and a memory coupled to the processor. The memory may encode one or more programs to cause the processor to perform one or more of the methods described in the application. Further subject matter described in the present disclosure can be implemented using various machines.

Details of one or more implementations are set forth in the exemplary drawings and description that follow. Other features will be apparent from the description, the drawings, and from the claims.

### Brief Description of the Drawings

Figure 1 shows a method for collaboratively training a model by a plurality of nodes in a computer network.
Figure 2 shows further steps of the method of Figure 1.
Figure 3 shows an example of interactions between nodes of the computer network when training the model.
Figure 4 shows an example of the method in which an algorithm for training the model includes affinity analysis.
Figure 5 shows an example of the method in which the model is a neural network and progressive training of the model is carried out.
Figure 6 continues the example of figure 5 and shows removal of obfuscation and normalization of the model.
Figure 7 shows a general purpose computer that may be used to implement aspects of the method.

### Detailed Description

In the following text, a detailed description of examples will be given with reference to the drawings. Various modifications to the examples may be made. In particular, one or more elements of one example may be combined and used in other examples to form new examples.

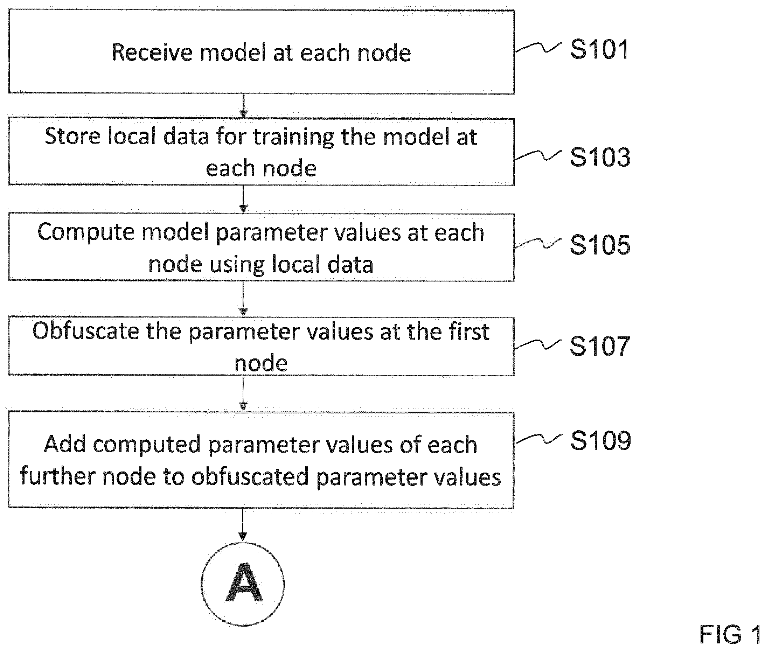

Figure 1 shows steps of a method for collaboratively training a model by a plurality of nodes in a computer network.

At step S101, the model may be received at each of the nodes in the computer network. Accordingly, each node in the computer network may store the same model. The model may be a machine learning model and/or a data analysis model.

More specifically, the model may be implemented via association rules that are in turn implemented as a set of relational rules that represent information captured by a machine learning algorithm. Alternatively, the model may be implemented as a neural network (i.e., an artificial neural network). The neural network may be based on a collection of connected units called artificial neurons, which model the neurons of a biological brain. Each connection of the neural network, like the synapses in the biological brain, can transmit information from one artificial neuron to another. The connections between artificial neurons may be referred to as edges. Artificial neurons and edges may each have a weight that is adjusted as learning (i.e., training) proceeds. In particular, the weights may increase or decrease the strength of the signal at a connection. An artificial neuron of the network may receive information (i.e., a signal), process the information and then signal additional artificial neurons connected to the artificial neuron.

The model received by each of the nodes may be untrained. For example, the model received by each of the nodes may include null parameter values or randomly initialized parameter values.

At step S103, each node of the plurality of nodes in the computer network may store local data for training the model at the node. Accordingly, the local data at one node may be independent of local data at any other node. The local data may also be referred to as training data or learning data. The local data may have been stored at each of the nodes before the model is received and/or may be gradually created over time.

At step S105, each node of the nodes computes model parameter values using the respective local data stored at the node. For example, a first node of the nodes may compute model parameter values from the local data stored at the first node. Similarly, a second node of the nodes may compute model parameter values from the local data stored at the second node. The model parameter values may be variable or numeric data that is adjusted as the model is trained.

At step S107, the computed parameter values of the first node may be obfuscated by the first node. The obfuscating may have the advantage of making it impossible or prohibitively difficult for further nodes of the plurality of nodes to reverse engineer (or work back from) the model parameter values in order to discover sensitive information of the first node, or any other node. For example, when the model parameter values are support values for items sets in an association rule model, the obfuscation of the support values may prevent further nodes from determining transaction information (local data) of the first node.

At step S109 the parameter values may be progressively trained at each further node using the computed parameter values of the respective further node. Accordingly, each of the further nodes may add the computed parameter values of the respective further node to parameter values received from the previous node. In step S109, all nodes of the plurality of nodes other than the first node may carry out training of the parameter values using respective computed parameter values of that node. Hence, model parameter values may be sent from one node to the next for additive training until all nodes have additively trained the model parameter values.

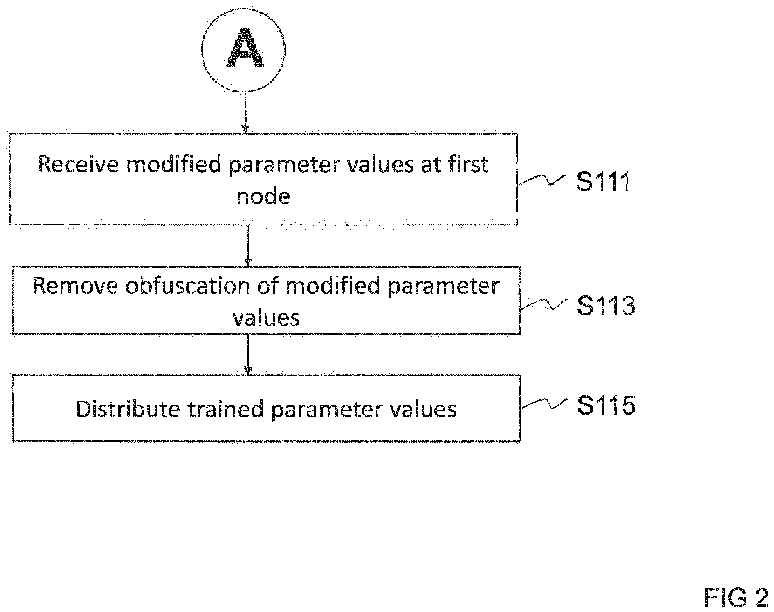

Turning to figure 2, step S111 may be carried out after all nodes (or all active nodes, e.g., in the case that one of the nodes skipped due to a timeout, possibly because the node is unreachable) have trained the parameter values. Accordingly, the modified parameter values resulting from the training by each one of the further nodes may be received at the first node.

At step S113, the obfuscation of the modified parameter values may be removed at the first node to produce trained parameter values.

At step S115, the trained parameter values may be distributed to all other nodes of the plurality of nodes. The distribution may be from the first node.

The method of collaborative training described above may have the advantage of not requiring the exchange of business or personally sensitive training datasets between nodes of the plurality of nodes. In addition, the training data might not be revealed to any third party service provider or other administrator of a central server.

Further, the method of figures 1 and 2 may prevent nodes within the plurality of nodes from being able to determine sensitive information from model parameter values. For example, the obfuscating may prevent a second node of the plurality of nodes from determining sensitive information of the first node. In addition, once the second node has performed training of the model parameter values, it may be prohibitively difficult (challenging) for a third or fourth node of the plurality of nodes (or any further node) to determine where modifications of the model parameter values came from. In other words, after multiple training steps, it may be challenging to determine which node adjusted the parameter values. Also, it may be challenging to determine the extent of each parameter value adjustment performed by each node.

In some cases, the parameter values might not be updated by a node during training. For example, in the context of association rule learning, it is possible that one of the nodes does not have any local data relating to one of the association rules.

When the model is implemented as a neural network (i.e., neural network model), the weights of the neural network may be encoded as floating point or double values representing thousands, millions, or even billions of interactions between interconnected neurons that are dispersed across multiple layers of the neural network.

The method outlined above may be applied broadly independently from the specific algorithm or model. Accordingly, a similar approach may be taken for the neural network, the association rules, or another type of machine learning model or data analytics model.

By training model parameter values the model itself may be trained. Accordingly, by training the model parameter values, rules of a recommender engine, the weights of a neural network (e.g., for object or pattern recognition) the configuration values for a prediction algorithm, etc., may be trained in an additive manner. Accordingly, the method may make unnecessary to share training data, including preferences, location information, photos, log files, sensor values, etc.

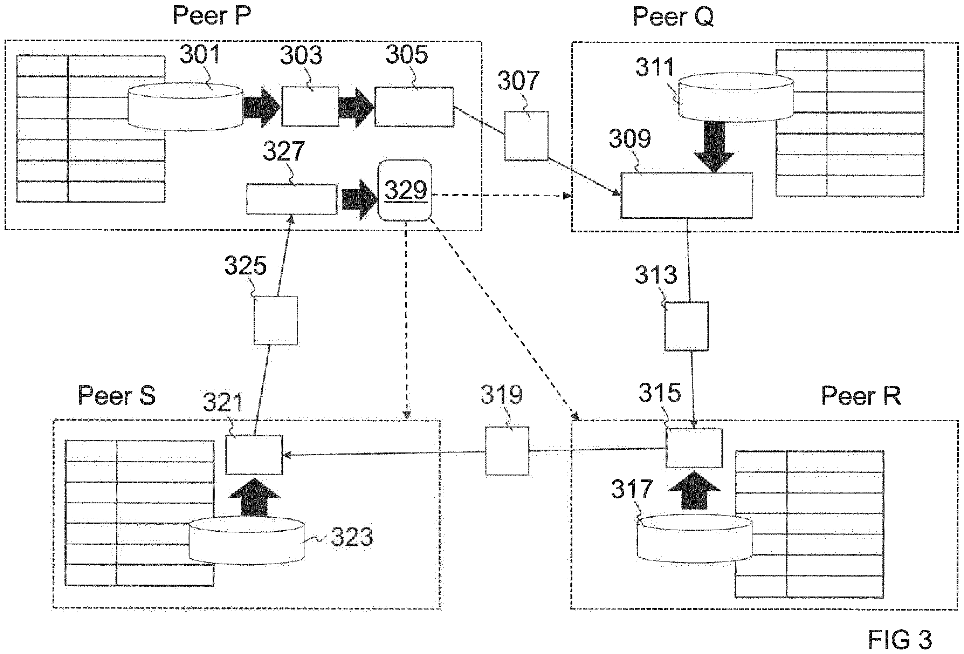

Figure 3 shows a flow diagram in which steps of the method of figures 1 and 2 are depicted. The nodes of the computer network are referred to as peer P, peer Q, peer R, and peer S. Accordingly, in the example of Figure 3, the computer network is a peer-to-peer network.

Peer P includes a database for storing local data 301 for the peer. A table is shown underneath the database, indicating that the local data may be stored according to a relational model, i.e., as one or more tables. Other mechanisms for storing the local data of peer P are also possible. The local data 301 from the database may be used to compute, according to the algorithm, the parameter values for the model. The parameter values may be computed at 303. The arrow between the local data 301 and 303 may indicate that the computed parameter values are computed (or generated) from the local data 301 of the database. The computed parameter values may be obfuscated at 305. The obfuscated parameter values (may be transmitted from peer P to peer Q in the form of a first version of the model 307. The first version of the model 307 may include or be limited to the obfuscated parameter values.

Progressive training of the obfuscated parameter values may begin at 309. Local (training) data 311 of peer Q from a corresponding database may be used to compute parameter values of peer Q.

The training of the obfuscated parameter values may be carried out using the first version of the model 307 and computed parameter values of peer Q. The training at peer Q may involve adding the computed parameter values of peer Q to the obfuscated parameter values received from peer P in the first version of the model 307. Upon completion of the training at peer Q, a second version of the model 313 may be sent from peer Q to peer R for further training (i.e., continuation of the progressive training).

Further training of the model at peer R may be carried out using the second version of the model 313. Prior to arrival of the second version of the model 313, local data 317 of peer R from a corresponding database may be used to compute parameter values of peer R. Accordingly, a training step at peer R may be carried out at 315 in order to produce a third version of the model 319. The training step at peer R may involve adding the computed parameter values of peer R to the respective parameter values received from peer Q in the second version of the model 313. The third version of the model 319 may be sent to peer S for further training. The third version of the model 319 may be the result of the addition of the computed parameter values of peer R to the respective parameter values received from peer Q.

Further training of the model at peer S may be carried out at 321. Prior to the training, local data 323 of peer S from a corresponding database may be used to compute parameter values of peer S. Peer S may be referred to as a final peer or final node. Accordingly, a fourth version of the model 325 may be sent from peer S back to peer P. The fourth version of the model 325 may be computed by adding the computed parameter values of peer S to the respective parameter values of the third version of the model 319. Similar to previous versions of the model, the fourth version of the model 325 may comprise or be limited to model parameter values. Since all the peers have trained the model parameter values, the fourth version of the model 325 may comprise (or consist of) modified parameter values.

The obfuscation of the modified parameter values received from peer S may be removed by peer P at 327. Accordingly, trained parameter values may be produced at 329. The trained parameter values 329 may then be distributed from peer P to peers Q, R and S as shown by the arrows from 329 to the peers Q, R, and S. Alternatively, the trained model parameter values may be distributed along the logical ring formed by peers P, Q, R and S according to a gossip protocol or a similar protocol.

The peers may be thought of as a logical ring in the sense of the way model parameter values are distributed among the peers at 307, 313, 319, and 325. Accordingly, the ring may describe the flow of the model parameter values among the peers.

The progressive training of the obfuscated parameter values at each further node of the plurality of nodes may be carried out by sending the parameter values from one node to a neighbor node. Accordingly, each neighbor in the logical ring of nodes may receive the parameter values computed by a previous node in the logical ring and further train the parameter values in order to produce the modified parameter values.

This approach may have the advantage of avoiding a high communication overhead associated with distributing parameter values to all other nodes. In particular, according to some conventional approaches, computed parameter values from each node are distributed to all other nodes (i.e., to n-1 nodes, where n is the number of nodes). As discussed above, this may be referred to as the star topology.

By sending parameter values from one neighbor to the next without sending the parameter values to all other nodes, the amount of network bandwidth needed may be reduced, while still providing good or adequate training of the model.

The obfuscation of the parameter values may have the advantage of protecting the first node against malicious analysis attacks from subsequent nodes in the logical ring. The malicious analysis attacks may include reverse engineering attacks against a neural network model. Similarly, the further nodes may be protected from malicious analysis by the difficulty of determining which node caused adjustment of the parameter values and to what extent (if any) the parameter values were adjusted by a given node. The difficulty of determining may be due to the non-linearity of the model, particularly in the case of the neural network.

The algorithm applied to compute parameter values and the additive training applied at each node may be the same as the algorithm and training applied at every other node. During training (e.g., at 303, 309, 315 and 321), each node of the plurality of nodes may train the model in order to produce a new version of the model. In particular, the new version of the model may include adjusted model parameter values that have been changed based on respective computed parameter values of the node. In this way, each node indirectly helps the others to improve and/or refine the model step by step.

In the example of figure 3, peer S performs the final round of training according to the algorithm. Upon performance of the final round of training, the fourth version of the model 325 is sent to peer P at 327 for removal of the obfuscation. The obfuscation may also be referred to as camouflage. The obfuscation may be removed by performing an inverse of the function used to obfuscate the computed parameter values. Upon removal of the obfuscation the parameter values may be referred to as "trained". These trained parameter values 329 may be distributed to peers Q, R and S.

The method above may have the advantage of collaboratively training a model without revealing parameters of the model to any of the nodes involved in the training or to a central server. In particular, the model parameter values of the first node are protected via the obfuscation performed by the first node (i.e., peer P). The model parameter values of further nodes are protected since it may be prohibitively difficult to determine how each of the previous nodes contributed to the parameters arriving at a particular node. For example, it may be difficult for peer R to determine the specific contributions of peer P and peer Q to the computed model parameter values that arrive at peer R at 313.

In some conventional approaches, an entire model (rather than the parameter values of the model) is trained or retrained by multiple nodes. A node trains the model and sends the trained model to a next node, the next node further trains the model and sends the further trained model to yet another node, and so on. These conventional approaches have a disadvantage in that the length of the chain (i.e., the more nodes) reduces the effect of the first node's training, i.e., the model "forgets" the training of the first node if the chain is too long (as in the "hospital" example described above). Another disadvantage present in conventional approaches is that a first node can introduce a strong bias into the model, which latter nodes cannot compensate for or balance out (the memory of the training of the first node is too strong).

The approach of the present application avoids these disadvantages since the algorithm (e.g., rule based machine learning or use of a neural network) is only applied to local data of the node to compute parameter values. In other words, no continuous or evolutionary training of the model takes place. Instead, locally computed parameter values are added together and then used in a final model (i.e., in the form of the trained parameter values).

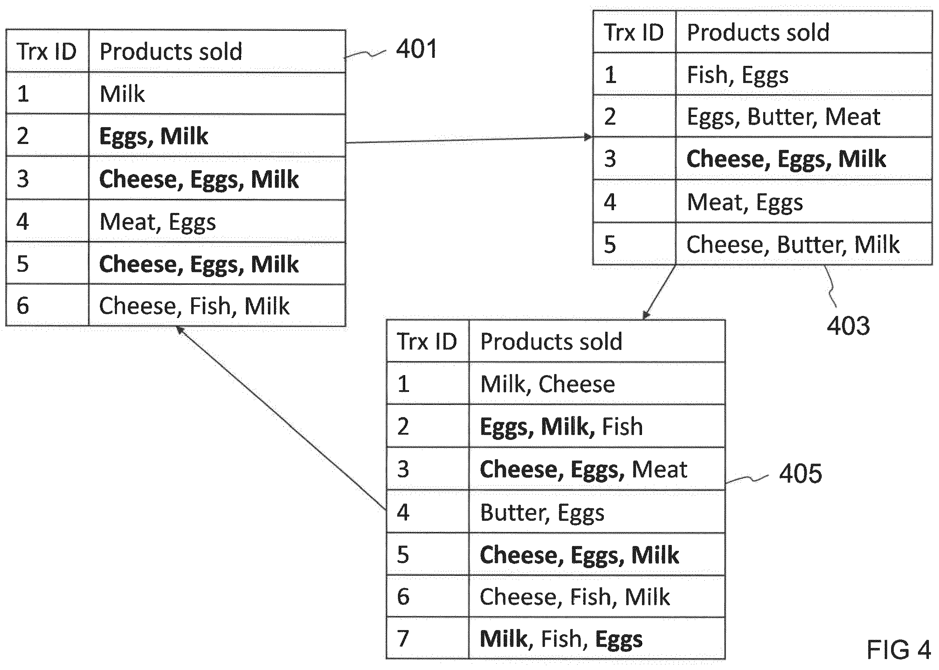

Figure 4 shows a simplified example of the method of figure 3 in the context of rule based machine learning. More specifically, figure 4 is an application of association rule learning, even more specifically, affinity analysis (i.e., market basket analysis).

Although discussed in the context of rule-based machine learning, the techniques of described in the context of figure 4 may be used with other algorithms unless otherwise indicated.

In the example of Figure 4 the model may include an information filtering system, more specifically, a recommender engine (i.e., a recommendation system). The depicted example shows transactions from three grocers. In particular, Figure 4 includes a set of transactions 401 from a first grocer, a set of transactions 403 from a second grocer, and a set of transactions 405 from a third grocer.

It may be a problem to determine which products are typically bought together in order to make recommendations in a web shop. For example, a typical recommendation may be, "customers who buy milk like you, also buy eggs. Would you like to buy eggs?".

The set of transactions 401 may correspond to the local data depicted in Figure 3, i.e., the local data 301, the local data 311, the local data 317, and the local data 323. The recommendation of this example is based on the Apriori algorithm (an exemplary association rule algorithm), however, other algorithms may be used. Accordingly, a breadth first search strategy may be used to count the support of itemsets and a candidate generation function that exploits the downward closure property of support values may also be used. Shopping transactions may be provided as input to the algorithm, i.e., a list of products or stock keeping units (alphanumeric character combinations that can be scanned as bar codes or QR codes) that a particular customer bought in combination.

The output of the algorithm may be a list of rules together with a likelihood that a rule is true. In other words, each of the rules may have a corresponding support value indicating how frequently an itemset (i.e., set of items) of the rule appears in the set of transactions.

An example rule might be that milk and eggs are bought together. Based on local data (i.e., the sets of transactions 401, 403 and 405), the grocers may compute the support for each of the rules of the model. For example, a first rule, "milk and eggs are bought together" and a second rule, "eggs and cheese are bought together" may be computed. Accordingly, from the set of transactions 403, the second grocer may determine that one out of five transactions fulfill the rule of "milk and eggs are bought together".

It may be that the algorithm (e.g., the association rule algorithm of this example) may return better results when provided with more training data. Accordingly, the combination of the sets of transactions 401, 403, and 405 may produce better results than simply running the algorithm with the set of transactions 401 alone.

According to conventional approaches, a trusted central system of a service provider may be provided with access to all transaction data 401, 403, and 405 of each of the grocers. This service provider could periodically copy or be sent all data from each of the grocers and perform market basket analysis for each of the grocers' recommender engines, e.g., daily. Based on the entire training dataset (i.e., the transactions 401, the transactions 403, and the 405) the central service provider could determine that the overall support for the rule of milk being sold together with eggs is equal to 7/18.

As can be seen from Figure 4, there were a total of 18 transactions across the three grocers and seven of the transactions fulfill the rule. Moreover, the global value for the rule differs from the local values that can be computed by each grocer. In particular, the first grocer may determine from the transactions 401 that three transactions fulfill the rule of milk being sold together with eggs. The second grocer may determine from the transactions 403 that only one transaction fulfills the rule of milk being sold together with eggs. The third grocer may determine from the transactions 405 that three transactions fulfill the rule of milk being sold together with eggs.

In some cases, it may not be desirable for users to share training data or even model parameter values with other users. For example, the first grocer might not want to share the transactions 401 with the second grocer. Further, even the support information from the transactions 401 (i.e., the parameter values of the model) might include sensitive information that the first grocer would not want to share with the second grocer.

Accordingly, an alternative to the central service provider may be desirable. In such cases, the approach of Figure 3 may be used. This approach may be referred to as an additive training approach to collaboratively compute model parameter values, without revealing local training data or even raw (unobfuscated) model parameter values to other nodes of a plurality of nodes.

Support is determined by the ratio of two values: (1) the number of transactions that fulfill the corresponding rule and (2) the total number of transactions. In a given setup, (1) might have a different value for each rule (there may be at least 100 or at least 1000 rules), while (2) may have the same value for each rule. Therefore (1) might be implemented as a vector or array of values, while (2) may be implemented as a scalar value.

The model may be received at each grocer as a set of rules, e.g., milk → eggs, eggs -> cheese. In the following, rules may be inside parentheses () and the rightward arrow symbol → in the rule indicates that the products (e.g., milk and eggs) were bought together.

Accordingly, each first grocer may run the algorithm using local transactions to compute corresponding model parameter values. For the first grocer, the transactions 401 (i.e., the local data stored by the first grocer) may be used. The computed parameter values include rules and their respective likelihoods (i.e., support values) are represented as a ratios or percentages.

Hence, for the first grocer a model parameter value (i.e., support value) for a first rule may be expressed as support(milk → eggs) and may be computed as the support value 3/6 from the transactions 401. Similarly, a model parameter value for a second rule may be expressed as support(eggs → cheese) and may be computed as the support value 2/6.

For the second grocer, a support value for support(milk → eggs) may be computed as 1/5 from the transactions 403. A support value for support(eggs → cheese) may be computed as 1/5.

For the third grocer, a support value for support(milk → eggs) may be computed as 3/7 and a support value for support(eggs → cheese) may be computed as 2/7 from the transactions 405.

As noted above, the overall support value for milk → eggs is 7/18, which is derived from the local support values of 3/6, 1/5 and 3/7 for each of the grocers. The overall support for milk → eggs is not computed as a sum of locally determined support values, which would be 3/6 + 1/5 + 3/7 = 237/210 = 1,129. Instead, the overall support value is close to an average of the local support values.

In order to perform obfuscation, the first grocer may modify the support values before sending the support values to the second grocer. In this way, the first grocer may protect sensitive information from the second grocer while still providing the second grocer with useful training data.

Accordingly, in order to perform obfuscation, the first grocer may increase both the numerator and the denominator of the support value by adding the same number to both the numerator and the denominator of the ratio. The number added may be randomly (i.e., pseudo-randomly) selected. The number added may be within a specified range. For example, the number added may be greater than zero and may be less than a multiple of the total number of transactions. Hence, the number added may be less than twice the total number of transactions at the node or less than three times the total number of transactions. For example, the total number of transactions for the first grocer is 6. Accordingly, the range may be from 1 to 6 or from 1 to 12 or from 1 to 18. In one example, the number added may be 7, i.e., 7 may be added to both the numerator and the denominator of the support value.

Alternatively, or in addition, pseudo parameters may be added to the dataset, i.e., the set of transactions, in order to perform obfuscation. For example, support for a fake rule, e.g., "hammer sold together with nails" may be added to the transactions 401 even though neither hammers nor nails are sold by the first grocer.

Without the obfuscation of the model parameter values by the first grocer it might be possible for the second grocer to learn a great deal of sensitive information from the parameter values provided by the first grocer. In some cases, the second grocer might even be able to reconstruct all of the transactions 401. Similar reconstruction or reverse engineering might also be possible with model parameter values of neural networks or similar complex models.

Moreover, other obfuscation methods (alternative mathematical operations or cryptography) beyond adding a single value to (each of) the model parameter values are possible.

The obfuscated parameter values (i.e., the obfuscated support values) may be sent from the first grocer to the second grocer. The link between the first grocer and the second grocer may provide for authentication and encryption (e.g., via HTTPS, more particularly, transport security layer (TLS) or secure sockets layer (SSL)). The authentication may be carried out using public key cryptography.

Accordingly, upon receiving obfuscated model parameter values from the first grocer, the second grocer may add its own computed parameter values to the received parameter values. In some cases, the second grocer might not have any support values to add to the computed parameter values received from the first grocer (e.g., some of the computed parameter values of the second grocer may be 0 or null).

In the depicted example, the second grocer may add 1/5 to the support value for the rule milk → eggs (milk bought with eggs) and 1/5 to the support value for the rule eggs → cheese (eggs bought with cheese). Furthermore, the second grocer may receive an obfuscated support value of 10/13 for the rule milk → eggs and another obfuscated support value of 9/13 for the rule eggs → cheese. These obfuscated support rules may be derived by adding seven to the numerator and denominator for the support value for milk → eggs of 3/6 and the support value for eggs → cheese of 2/6 from the first grocer.

Accordingly, adding the support values from the first grocer and the second grocer results in a combined support value for milk -> eggs of 11/18 and a combined support value for eggs → cheese of 10/18. Further, adding the support values from the third grocer of 3/7 for milk → eggs and 2/7 for eggs → cheese results in modified support values (i.e., modified parameter values) of 14/25 for milk → eggs and 12/25 for eggs → cheese at the third grocer. These modified support values may be received at the first grocer. The first grocer (or a computer system of the first grocer) may be considered a first node and correspond to the peer P of figure 3. Similarly, the third grocer may be considered a final node and correspond to peer S of figure 3.
As an alternative, the first grocer can also pick separate or different (pseudo) random numbers (i.e. keys or values) to be added to each parameter value. For instance, the first grocer could obfuscate the number of transactions that fulfilled the rule milk → eggs by adding 5 to the original numerator of the ratio, and 17 to the total number of transactions (the denominator). Note that random number generation is time consuming (i.e., substantial computing time may be required to compute many random numbers), and sometimes models may have millions of parameter values. Therefore, it may be advantageous to use the same (secret) random number to obfuscate each of the parameter values.

If new rules are added by one of the nodes in the plurality of nodes other than the first node (e.g., the nodes for the second and third grocers) these nodes may also perform obfuscation of the parameter values. For example, if the second grocer also sold bananas and determined to add an association rule for bananas to the model then the second grocer would also obfuscate the support value for the new bananas rule. The new rule could be sent along with support values for existing rules (and the new rule) to the third grocer.

Further, after obfuscation is removed at the first grocer the model parameter values would be passed to the second grocer for another obfuscation removal step before distributing trained parameter values to the remaining nodes.

If a further node other than the first node adds additional rules, then the first node would receive the additional rules along with the modified parameter values at S111. Similarly, subsequent nodes after the further node would also receive the additional rules.

An advantage of the disclosed obfuscation approach is that only the node that adds obfuscation can remove the obfuscation, since other nodes will not be able to determine how the obfuscation was carried out or how the obfuscation could be removed.

Training of the computed parameter values provided by the first grocer may be carried out by the second and third grocers. The training performed by the second and third grocers may be carried out by adding their locally computed parameter values to values received from the previous grocer (the previous grocer being the first grocer in the case of the second grocer; the previous grocer being the second grocer in the case of the third grocer). In addition, the association rules used by the first grocer may also be used by the second and third grocers.

In some cases, a list of all association rules (i.e., an association rule model) may be received before any further steps are carried out. The list may be received by all of the nodes, i.e., all of the grocers in this example. In other cases, an initial list may be received by all of the nodes and further association rules may be added depending on the transactions 401, 403, and 405 carried out by each of the grocers. In particular, the grocers may determine that additional association rules beyond those provided with the initial model should be added to the model. If further association rules are added to the initial model, then support values corresponding to the further association rules may be obfuscated. In order to remove the obfuscation, the model parameter values may be sent to each of the nodes for obfuscation removal after the first grocer has removed its own obfuscation. In some cases, removal of obfuscation may comprise carrying out the inverse of the original obfuscation function (e.g., subtraction to reverse addition) using the same secret (possibly random) value(s) that was/were used in the original obfuscation function.

When removing the obfuscation for each rule, the first grocer may decrease (reduce) the numerator and the denominator of the support value. For example, the modified parameter values received at the first node 401 may be 14/25 for milk → eggs and 12/20 for eggs → cheese. Subtracting 7 from the numerator and denominator of each of these values results in overall support values (i.e., trained parameter values) of 7/18 for milk → eggs and 5/18 for eggs → cheese. These trained parameter values are then be distributed from the first grocer to the second and third grocers.

Once the trained parameter values have been distributed, the models of the second and third grocers (i.e., recommendation engines) may be reconfigured with the trained parameter values. In this way, the each of the nodes may benefit from local data 401, 403 and 405 provided by the other nodes without having access to sensitive information from the other nodes. In particular, it may be prohibitively difficult to determine the effect of local data (transactions 401, 403, and 405) from each node on the trained parameter values finally received at each node.

Conventional approaches to federated learning, e.g., as provided by Google, Apple, Tesla, etc., may use a central computation engine to train model parameter values based on local data provided by thousands or even millions of user devices. A common feature of these approaches is a single trusted entity that receives training data from multiple devices and performs training of the model using that data.

In contrast, the method of figures 1 to 4 does not rely on a central service provider (i.e., central server) for training. Instead, the disclosed approach may be peer-to-peer, such that sensitive data from one peer is not exposed to another peer.

Although the approach of figure 4 does not include the central server (for training) a third party service provider could still be used. In particular, the third party service provider could help orchestrate and/or manage groups of peers, for example in particular industries with related interests that produce similar datasets. Further, the third party service provider could introduce optimization methods. For example, the third party service provider could maintain a group of registered users in different segments or specialties, e.g., food, fashion, fast moving consumer goods (i.e., consumer packaged goods or products that are sold quickly and add a relatively low cost, such as household goods or dry goods), jewelry. Here groups could be set up for banks, credit card companies, insurance companies, car manufacturers, etc. A user could select a peer group to join and the service provider would connect and maintain the group.

Services provided by the service provider might include the setup of technical connectivity to communicate with other members of the group (e.g., in a logical ring) while the parameter values are being trained. In addition, the service provider may install software for the model and for the training at each of the nodes. The service provider may also handle database configuration and maintenance of the local data as well as management of the local data during the training of the parameter values. Furthermore the service provider could distribute initial models as staring points for the peers, where the initial models may be developed by the service provider using synthetic data and refined by the peers using local data, based on experience at the peers.

During training, the provider could monitor progress of the model and help handle potential errors, for example, in case one of the peers is disconnected or does not perform further steps due to a hardware or software failure (e.g., time out).

A number of possibilities exist for the order in which training is conducted. For example, an order of peers could be based on network connection parameters such as bandwidth, response time, latency, etc., of the peers in the network. The training could start with the peer having the highest bandwidth in order to increase the likelihood that the first training step would be successful. In addition, when the first node is responsible for distributing the trained parameter values to the other nodes, it could be beneficial for the first node to have sufficient bandwidth. Other means for determining an order of training are also possible.

After completing a training cycle (i.e., after each peer in the network has trained the parameter values) a decision could be made as to whether the training should be carried out again. For example, the third party provider (i.e., the service provider) could make the decision about whether to carry out the training again or could assist in making this decision. In particular, training could be repeated in order to reach increased model accuracy. For example, the third party provider might store information indicating that a specific neural network model cannot provide an accuracy greater than 98%. If the trained parameter values have reached an accuracy of 92%, another cycle of training could be conducted. If the trained parameter values are already at 97.8%, the provider may give a hint to end the training process and distribute the trained parameter values to the nodes.

In the grocery example of Figure 4, the first cycle would already provide optimal accuracy due to the selected Apriori algorithm.

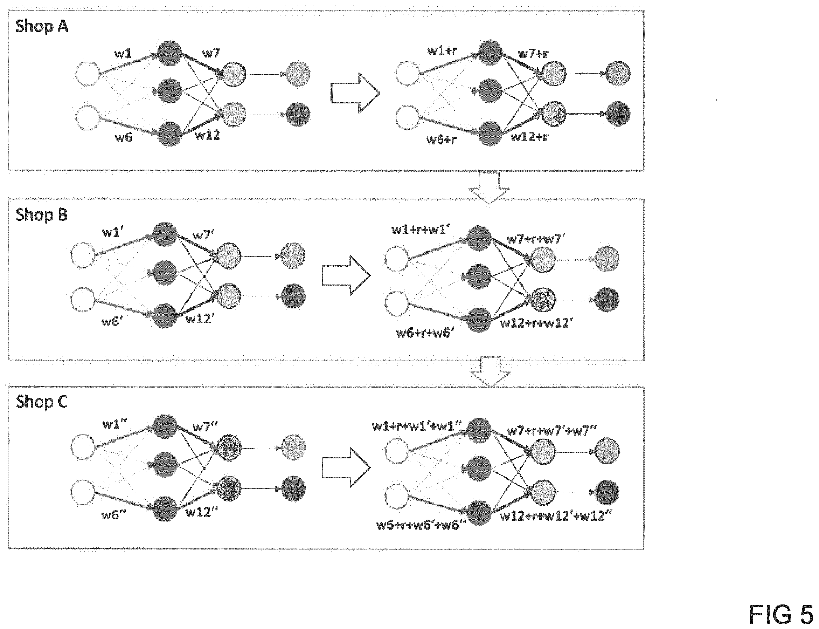

Figure 5 shows an example of the method in which the model is a neural network and progressive training of the model is carried out. The shops may each be implemented as corresponding nodes of a computer network. In the depicted example, Shop A may correspond to Peer P of figure 3, Shop B may correspond to Peer Q and Peer R, and Shop C may correspond to Peer S.

Instead of using the association rules of figure 4, the model may be implemented as a (deep) neural network (NN). The NN may be used to perform data analytics, e.g., to predict buyers' preferences. Accordingly, each shop may receive a model, e.g., a "dumb" un-trained NN model. Local data may be stored at each shop for training the NN model. The local data may correspond to the local data discussed in connection with figures 3 and 4. The local data may include structured and/or unstructured data, e.g., regarding buying transactions, buyer's preferences, etc.

In case of the a-priori basket analysis discussed in connection with figure 4, the training/determination of model parameters, is a relatively simple task. Each participant basically counts occurrences for each rule of the model, and there may be a few thousand rules.

In the case of a neural network model, as in the present example, the training of (possibly millions of) model weights may be a much more complex computational task. Nevertheless, at the end of the computation each shop (node) will have computed parameter values for each model parameter (also referred to as "weights" in the context of the NN), analog to the support likelihoods for each rule in the example of figure 4. During the model training (progressive training) no new weights or neurons are created or deleted; instead, new values for existing model weights are calculated.

Analog to the example of figure 4, shop A obfuscates locally computed model parameter values, e.g., the NN model weight values of shop A, by adding a random number rto each weight value. In the simplified example of figure 5, only some selected weights w1, w6, w7 and w12 are highlighted (in total the model has 12 weight values and all weight values of the model may be obfuscated).

Shop A then sends the obfuscated model parameter values to Shop B. Since the model parameter values are obfuscated, shop B will be unable to determine anything from them or usefully employ them in the NN model.

Shop B may add parameter values w1', w6', w7' and w12' (locally computed at shop B) to each of the corresponding model weight values (parameter values) received from shop A and send a new model version (i.e., the resulting parameter values) to shop C. Shop C (a final node corresponding to peer S) will repeat the same procedure and add locally computed parameter values to the values received from shop B.

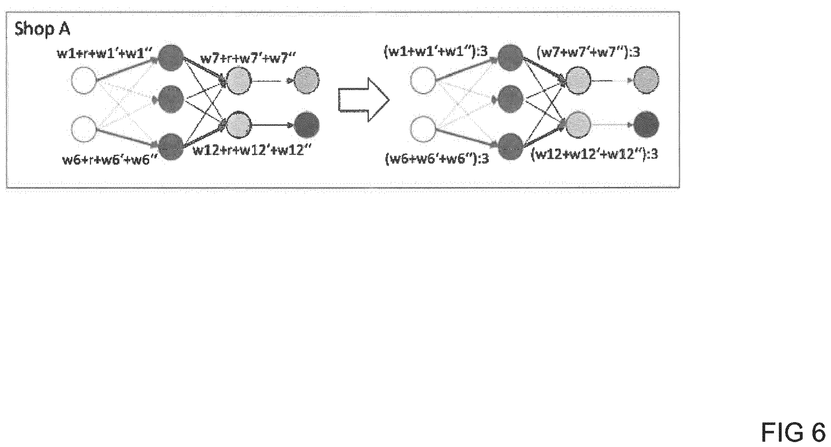

As shown in figure 6, after shop C has sent the (still obfuscated) model parameter values (i.e., the modified model parameter values) back to shop A, shop A will clean up the parameter values (i.e. remove the obfuscation) by decreasing each model parameter value by the previously added secret value r.

At this point, the parameter values at shop A are the sum of all model parameter values from each node. Therefore, shop A (the first node) normalizes the parameter values. For example, shop A may carry out the normalization by dividing each parameter value by the number of nodes, in this case by 3.

Shop A may broadcast (i.e., distribute) the trained parameter values to the other shops.

In some cases, it may be advisable to perform multiple training iterations before distribution of the trained model parameter values. Hence, the trained parameter values can be sent from shop A to the other shops for further progressive training. In the case of further training iterations, obfuscation/removal would not be necessary. Such further training iterations may be particularly advantageous in the context of a neural network (rather than association rules).

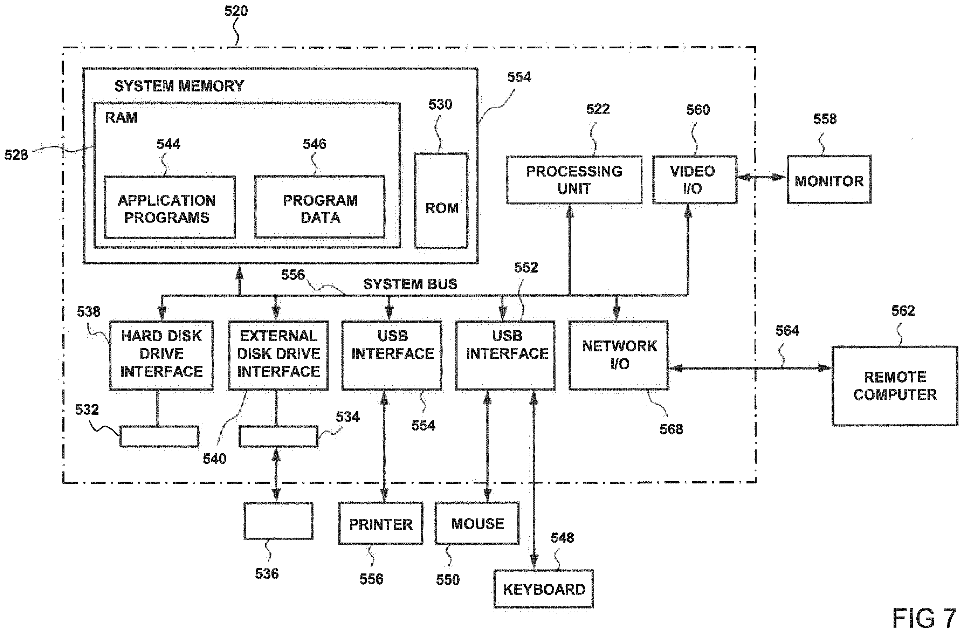

Figure 7 shows an exemplary system for implementing the claimed subject matter including a general purpose computing device in the form of a conventional computing environment 520 (e.g., a personal computer). The conventional computing environment includes a processing unit 522, a system memory 524, and a system bus 526. The system bus couples various system components including the system memory 524 to the processing unit 522. The processing unit 522 may perform arithmetic, logic and/or control operations by accessing the system memory 524. The system memory 524 may store information and/or instructions for use in combination with the processing unit 522. The system memory 524 may include volatile and nonvolatile memory, such as a random access memory (RAM) 528 and a read only memory (ROM) 530. A basic input/output system (BIOS) containing the basic routines that helps to transfer information between elements within the personal computer 520, such as during start-up, may be stored in the ROM 530. The system bus 526 may be any of several types of bus structures including a memory bus or memory controller, a peripheral bus, and a local bus using any of a variety of bus architectures.

The personal computer 520 may further include a hard disk drive 532 for reading from and writing to a hard disk (not shown), and an external disk drive 534 for reading from or writing to a removable disk 536. The removable disk may be a magnetic disk for a magnetic disk driver or an optical disk such as a CD-ROM for an optical disk drive. The hard disk drive 532 and the external disk drive 534 are connected to the system bus 526 by a hard disk drive interface 538 and an external disk drive interface 540, respectively. The drives and their associated computer-readable media provide nonvolatile storage of computer readable instructions, data structures, program modules and other data for the personal computer 520. The data structures may include relevant data for the implementation of the method for collaboratively training a model by a plurality of nodes in a computer network, as described above. The relevant data may be organized in a database, for example a relational or object database.

Although the exemplary environment described herein employs a hard disk (not shown) and an external disk 536, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 536, ROM 530 or RAM 528, including an operating system (not shown), one or more application programs 544, other program modules (not shown), and program data 546. The application programs may include at least a part of the functionality as discussed in connection with figures 1 to 6.

A user may enter commands and information, as discussed below, into the personal computer 520 through input devices such as keyboard 548 and mouse 550. Other input devices (not shown) may include a microphone (or other sensors), joystick, game pad, scanner, or the like. These and other input devices may be connected to the processing unit 522 through a serial port interface 552 that is coupled to the system bus 526, or may be collected by other interfaces, such as a parallel port interface 554, game port or a universal serial bus (USB). Further, information may be printed using printer 556. The printer 556, and other parallel input/output devices may be connected to the processing unit 522 through parallel port interface 554. A monitor 558 or other type of display device is also connected to the system bus 526 via an interface, such as a video input/output 560. In addition to the monitor, computing environment 520 may include other peripheral output devices (not shown), such as speakers or other audible output.

The computing environment 520 may communicate with other electronic devices such as a computer, telephone (wired or wireless), personal digital assistant, television, or the like. To communicate, the computer environment 520 may operate in a networked environment (the computer network described above) using connections to one or more electronic devices. Figure 7 depicts the computer environment networked with remote computer 562. The remote computer 562 may be another computing environment such as a server, a router, a network PC, a peer device (e.g., one of the peers in figure 3) or other common network node, and may include many or all of the elements described above relative to the computing environment 520. The logical connections depicted in figure 7 include a local area network (LAN) 564 and a wide area network (WAN) 566. Such networking environments are commonplace in offices, enterprise-wide computer networks, intranets and the Internet and may particularly be encrypted.

When used in a LAN networking environment, the computing environment 520 may be connected to the LAN 564 through a network I/O 568. In a networked environment, program modules depicted relative to the computing environment 520, or portions thereof, may be stored in a remote memory storage device resident on or accessible to remote computer 562. Furthermore, other data relevant to the method for collaboratively training a model (described above) may be resident on or accessible via the remote computer 562. It will be appreciated that the network connections shown are exemplary and other means of establishing a communications link between the electronic devices may be used.

The above-described computing system is only one example of the type of computing system that may be used to implement the method for collaboratively training a model by a plurality of nodes in a computing environment.

## Claims

1. A computer-implemented method for collaboratively training a model by a plurality of nodes (P, Q, R, S) in a computer network, the method comprising:
receiving (S101), by each of the nodes (P, Q, R, S), the model;
storing (S103), by each of the nodes (P, Q, R, S), corresponding local data (301, 311, 317, 323) for training the model;
computing (S105), by each of the nodes (P, Q, R, S) and according to an algorithm, parameter values of the model using the respective local data (301) of the node (P, Q, R, S);
obfuscating (S107), by a first node (P) of the nodes (P, Q, R, S), the computed parameter values of the first node (P);
progressively training (S109) the obfuscated parameter values at each further node (Q, R, S) of the nodes (P, Q, R, S), by adding the computed parameter values of the respective node to parameter values received from the previous node, whereby a final node (S) of the nodes (P, Q, R, S) produces modified parameter values (325);
receiving (S111) the modified parameter values (325) at the first node (P);
producing trained parameter values (329) for the model by removing (S113), by the first node (P), obfuscation of the modified parameter values;
distributing (S115), to all other nodes (Q, R, S) of the plurality of nodes (P, Q, R, S), the trained parameter values (329).

2. The method of claim 1, wherein each node is a peer, and the computer network is peer-to-peer.

3. The method of any one of the preceding claims, wherein the algorithm includes an information filtering system such as a recommender engine.

4. The method of any one of the preceding claims,
wherein the algorithm includes rule-based machine learning,
wherein the parameter values may include one or more of the following: support, confidence, lift, and conviction.

5. The method of claim 3 or 4, wherein the trained parameter values (329) include a plurality of support values and means for matching the support values to corresponding rules.

6. The method of claim 1 or 2, wherein the model includes a neural network,
wherein the neural network may be for recognition of objects in images,
wherein the parameter values may include weights,
wherein the parameter values may include biases,
wherein the model may include a deep neural network.

7. The method of any one of the preceding claims, wherein the computed parameter values are numeric and obfuscating the computed parameter values comprises executing one or more operations on the computed parameter values,
wherein the operations may include mathematical operations, such as arithmetic and/or bitwise operations.

8. The method of claim 7, wherein obfuscating the computed parameter values comprises generating a pseudo-random value and applying the pseudo-random value when executing the operations on the computed parameter values.

9. The method of any one of the preceding claims, wherein obfuscating the computed parameter values comprises applying a cryptographic function, such as an encryption function or a hash function.

10. The method of claim 9, wherein producing the trained parameter values comprises subtracting the obfuscated parameter values of the first node from respective modified parameter values to produce resulting parameter values and adding the computed parameter values of the first node to respective ones of the resulting parameter values.

11. The method of any one of the preceding claims, wherein producing the training parameter values (329) further comprises normalizing the modified parameter values after removing the obfuscation of the modified parameter values.

12. The method of any one of the preceding claims, wherein when the model includes a neural network,
obfuscating the computed parameter values comprises applying the same one or more arithmetic operations to each weight of the neural network, wherein the one or more arithmetic operations may consist of a single multiplication operation.

13. The method of any one of the preceding claims, wherein the nodes (P, Q, R, S) form a logical ring,
wherein each of the further nodes (Q, R, S) is a neighbour of a previous node in the logical ring,
wherein the first node (P) is a neighbour of two (Q,S) of the further nodes.

14. A computer program comprising instructions that, when the program is executed by a computer, cause the computer to carry out the method of any one of the preceding claims.

15. A computer system for collaboratively training a model, comprising:
a computer network;
a plurality of nodes (P, Q, R, S) connected by the computer network, wherein each of the nodes (P, Q, R, S) is configured to:
store the model and local data (301, 311, 317, 323) for training the model,
compute (S105), according to an algorithm, parameter values of the model using the respective local data (301) of the node (P, Q, R, S);
wherein a first node (P) of the nodes (P, Q, R, S) is configured to obfuscate (S107) the computed parameter values of the first node (P);
wherein each further node (Q, R, S) of the nodes (P, Q, R, S) is configured to:
progressively train (S109), the obfuscated parameter values by adding the computed parameter values of the respective node to parameter values received from the previous node, whereby a final node (S) of the nodes (P, Q, R, S) is configured to produce modified parameter values (325);
wherein the first node (P) is further configured to:
receive (S111) the modified parameter values (325);
remove obfuscation (S113) of the modified parameter values (325) in order to produce trained parameter values (329) for the model;
wherein at least one node (P,Q,R,S) of the nodes is configured to:
distribute (S115), to all other nodes (Q,R,S) of the plurality of nodes (P, Q, R, S), the trained parameter values (329).
